# EUROPEAN PATENT APPLICATION

(11) **EP 4 560 503 A1**
(43) Date of publication of application: **28.05.2025**
(21) Application number: 24213102.7
(22) Date of filing: 14.11.2024
(51) Int. Cl.: G06F 21/42, G06F 40/20, G06N 20/00

(54) **AUTHENTICATING USER ACTIONS USING ARTIFICIAL INTELLIGENCE**

(30) Priority: 27.11.2023 US 202318520116
(71) Applicant: Capital One Services, LLC, McLean, Virginia 22102 (US)
(72) Inventor: NEIGHBOUR, Erik, McLean, VA 22102 (US); CODY, Lea, McLean, VA 22102 (US)
(74) Representative: Boult Wade Tennant LLP

(57) **Abstract**

Methods and systems are described herein for authenticating user actions, while preventing social engineering attacks on the user. A request may be received for performing an action. The system may obtain, based on a plurality of parameters, a plurality of natural language representations of the action and prompt the user, on the user's mobile device, to describe what the user is attempting to do. The system may then use a machine learning model to determine whether the requested action matches the user's response. Based on determining that the natural language response matches a natural language representation, the system may generate a communication indicating that the action has been authenticated.

## Description

### BACKGROUND

In recent years, the use of mobile devices has risen exponentially. Users perform an ever-increasing number of actions and access a variety of data using their mobile devices. Many of these actions require different forms of authentication to be performed. For example, certain applications require usernames and passwords, while other applications require additional authentication. One form of such additional authentication is a requirement of using one-time passwords (OTPs). In many instances, an OTP is sent to a user through a short message service (SMS) message. Generally, the OTP contains a numerical string that, when entered into an application interface, authenticates the mobile device. However, OTPs are susceptible to social engineering attacks, sometimes referred to as phishing attacks. For example, a malicious actor may have access to a username and a password of a particular user and may attempt to log in to an application from a mobile device. The application may issue an OTP to the mobile device of the user. However, the malicious actor may contact the user (e.g., via SMS, electronic mail, or another vehicle) pretending that the contact is on behalf of the application, and request that the user provide the OTP. The user may not pay careful attention to that communication and may provide the OTP, thereby enabling the malicious actor to access the application. Accordingly, a mechanism is needed for making it more difficult to trick the user into providing the OTP or another type of passcode to a malicious actor.

### SUMMARY

Therefore, methods and systems are described herein for authenticating user actions while preventing social engineering attacks on the user. A user authentication system may be used to perform operations disclosed herein. A user authentication system may receive a request for performing an action (e.g., a login action or an account transfer action). In some embodiments, the user authentication system may receive a first communication that indicates that an action was requested in relation to a user. The first communication may include a plurality of parameters associated with the action. For example, a user may attempt to log in to an application on a user's mobile device and perform a particular action within the application. The user authentication system may receive that request or receive an indication that such a request has been made. When the user authentication system receives the request, the user authentication system may attempt to authenticate the user and/or the mobile device of the user. The user authentication system may perform the following operations for authenticating the user and/or the mobile device of the user.

The user authentication system may obtain, based on the plurality of parameters, a plurality of natural language representations of the action. For example, the user authentication system may access the parameters within the request such as an application name being used, an action that user is attempting to perform, and/or other parameters. The user authentication system may then use a large language model to generate natural language representations of the parameters. In some embodiments, the user authentication system may request that the large language model generate one representation. However, in some embodiments, the user authentication system may request that multiple representations be generated. In another example, the natural language representations may be generated based on stored templates that may be used in combination with some inputs related to the action.

When the request has been received, the user authentication system may prompt the user, on the user's mobile device, to describe what the user is attempting to do. In particular, the user authentication system may transmit, to a user device of the user, a second communication that includes a prompt for the user to describe the action. For example, the prompt may ask the user to state their objective by inputting a description of what the user is attempting to do. The user may enter a natural language response, such as: "I am trying to log in to my fitness application." In some embodiments, the user authentication system may transmit an SMS message to the user device or another suitable message. The user may then respond to the SMS message by inputting a description into the response field of the mobile device and sending the response back. This operation may force the user to think what is being asked of him or her and respond accordingly. For example, the user may realize that he or she has not asked for the action to be performed and may report the unauthorized activity or the user may input into the mobile device an indication that the activity has not been authorized. The user authentication system may receive, from the user device, a natural language response to the prompt.

In some embodiments, the prompt may include limited information about the action to give the user some context. In particular, the user authentication system may determine a low-security subset of the plurality of parameters. Those may be general parameters such as a name of the application. The user authentication system may then generate the prompt that includes the low-security subset of the plurality of parameters. For example, a lower-security parameter may be an application name or an application type. Accordingly, the user authentication system may generate a prompt requesting, "Please describe the action that you are attempting to perform in relation to Email Application." In some embodiments, the user authentication system may input the low-security subset of the plurality of parameters into a large language model to obtain a custom prompt related to the action. For example, the user authentication system may prompt the large language model to generate a natural language question asking the user to explain the user's action in relation to the application with a particular application name.

The user authentication system may then use a machine learning model to determine whether the requested action matches or otherwise corresponds to the user's response. In particular, the user authentication system may input the natural language response and the plurality of natural language representations into a machine learning model to obtain an indication of whether the natural language response matches or otherwise corresponds to one or more natural language representations of the plurality of natural language representations. In some embodiments, the machine learning model may have been trained to determine whether natural language representations describe a matching action. For example, the machine learning model may take, as input, the natural language response from the user and one or more natural language representations of the action. The machine learning model may then output whether there is a match between the user's input and one or more representations, thereby determining whether the action should be authorized.

The user authentication system may then, based on the output of the machine learning model, determine whether to authenticate the action or to cancel the action. In particular, based on determining that the natural language response matches or otherwise corresponds to the one or more natural language representations of the plurality of natural language representations, the user authentication system may generate a third communication indicating that the action has been authenticated. For example, the user authentication system may send an SMS message to the user indicating that the action is being performed. In some embodiments, the user authentication system may send a warning to the user indicating that the action will not be performed, and that the authentication has failed. That is, if the natural language response does not match one or more of the natural language representations, the user authentication system may warn the user of a possible breach.

In some embodiments, the machine learning model may be unable to determine whether the action that the user is describing matches or otherwise corresponds to one or more natural language representations of the actions and, in response, may request authentication using a different channel. In particular, the user authentication system may receive from the machine learning model a score below a first threshold that indicates that the natural language response matches or otherwise corresponds to the one or more natural language representations of the plurality of natural language representations and above a second threshold that indicates that the natural language response does not match the one or more natural language representations of the plurality of natural language representations. In response, the user authentication system may authenticate the action using a different channel. For example, the user authentication system may transmit an additional request via electronic email, by placing a voice call to the user, or via another suitable channel.

Various other aspects, features, and advantages of the system will be apparent through the detailed description and the drawings attached hereto. It is also to be understood that both the foregoing general description and the following detailed description are examples, and are not restrictive of the scope of the disclosure. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data), unless the context clearly dictates otherwise.

### BRIEF DESCRIPTION OF THE DRAWINGS

FIG. 1 shows an illustrative system for authenticating user actions, in accordance with one or more embodiments of this disclosure.
FIG. 2 illustrates a data structure of an authentication request, in accordance with one or more embodiments of this disclosure.
FIG. 3 illustrates user interfaces on a mobile device, in accordance with one or more embodiments of this disclosure.
FIG. 4 illustrates an exemplary machine learning model, in accordance with one or more embodiments of this disclosure.
FIG. 5 illustrates a data structure that may store one or more templates for responding to a user, in accordance with one or more embodiments of this disclosure.
FIG. 6 illustrates a computing system, in accordance with one or more embodiments of this disclosure.
FIG. 7 is a flowchart of operations for authenticating user actions, in accordance with one or more embodiments of this disclosure.

### DETAILED DESCRIPTION

In the following description, for the purposes of explanation, numerous specific details are set forth in order to provide a thorough understanding of the disclosed embodiments. It will be appreciated, however, by those having skill in the art, that the embodiments may be practiced without these specific details, or with an equivalent arrangement. In other cases, well-known models and devices are shown in block diagram form in order to avoid unnecessarily obscuring the disclosed embodiments. It should also be noted that the methods and systems disclosed herein are also suitable for applications unrelated to source code programming.

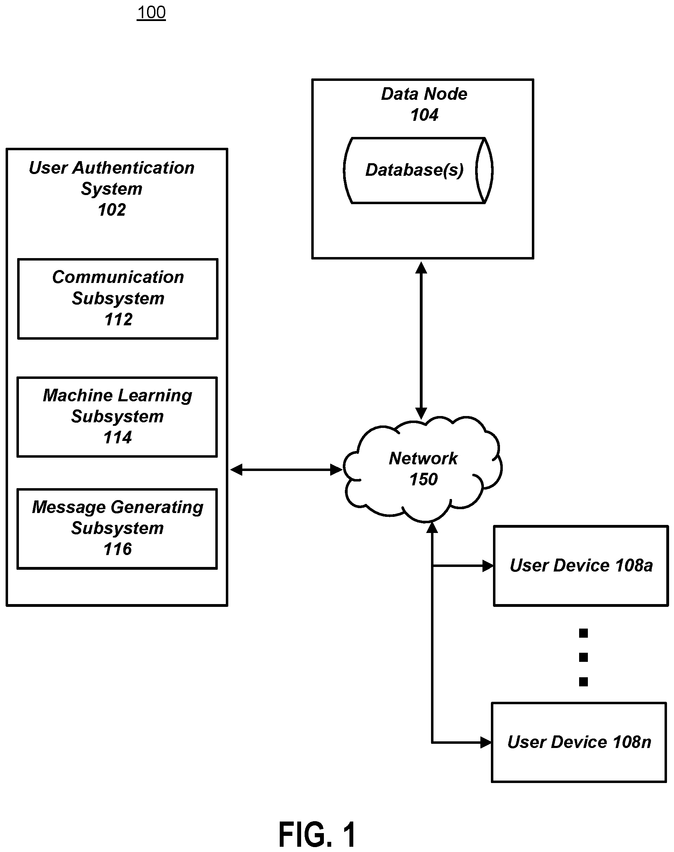

FIG. 1 is an example of environment 100 for authenticating user actions. Environment 100 includes user authentication system 102, data node 104, and user devices 108a-108n. In some embodiments, only one user device may be used, while in other embodiments multiple user devices may be used. User authentication system 102 may execute instructions for authenticating user actions. User authentication system 102 may include software, hardware, or a combination of the two. For example, user authentication system 102 may be a physical server or a virtual server that is running on a physical computer system. In some embodiments, user authentication system 102 may be configured (at least partially) on a user device (e.g., a laptop computer, a smartphone, a desktop computer, an electronic tablet, or another suitable user device).

Data node 104 may store various data, including one or more machine learning models, training data, large language model(s), and/or other suitable data. In some embodiments, data node 104 may also be used to train various machine learning models described in this disclosure. Data node 104 may include software, hardware, or a combination of the two. For example, data node 104 may be a physical server, or a virtual server that is running on a physical computer system. In some embodiments, user authentication system 102 and data node 104 may reside on the same hardware and/or the same virtual server/computing device. Network 150 may be a local area network, a wide area network (e.g., the Internet), or a combination of the two. User devices 108a-108n may be end-user computing devices (e.g., laptops, electronic tablets, smartphones, and/or other computing devices used by end users). In some embodiments, each user device may be a mobile computing device.

User authentication system 102 may receive a request to authenticate an action. In particular, user authentication system 102 may receive a first communication that indicates that an action was requested in relation to a user. The first communication may include a plurality of parameters associated with the action. In some embodiments, the first communication may be related to a login request into a particular application (e.g., an electronic email application). Accordingly, some of the parameters may be application name, username, and/or other suitable parameters. In some embodiments, the first communication may be related to a banking application. For example, using a banking application, a user may have wired a particular amount of currency to another institution. Accordingly, user authentication system 102 may receive an authentication request that indicates that an action (e.g., a banking transaction) was requested in relation to a user (e.g., from a user's account). The authentication request may include a plurality of parameters associated with the action (e.g., a source account/institution, a target institution), an amount of currency, an account type (e.g., checking or savings), and/or other parameters.

User authentication system 102 may receive request using communication subsystem 112. Communication subsystem 112 may include software components, hardware components, or a combination of both. For example, communication subsystem 112 may include a network card (e.g., a wireless network card and/or a wired network card) that is associated with software to drive the card. Communication subsystem 112 may pass the communication (e.g., the authentication request), or a pointer to the communication in memory, to machine learning subsystem 114.

Machine learning subsystem 114 may include software components, hardware components, or a combination of both. For example, machine learning subsystem 114 may include software components (e.g., that are able to execute application programming interface (API) calls to one or more machine learning models) that access one or more machine learning models. Machine learning subsystem 114 may access the communication, for example, in memory and perform operations related to the communication.

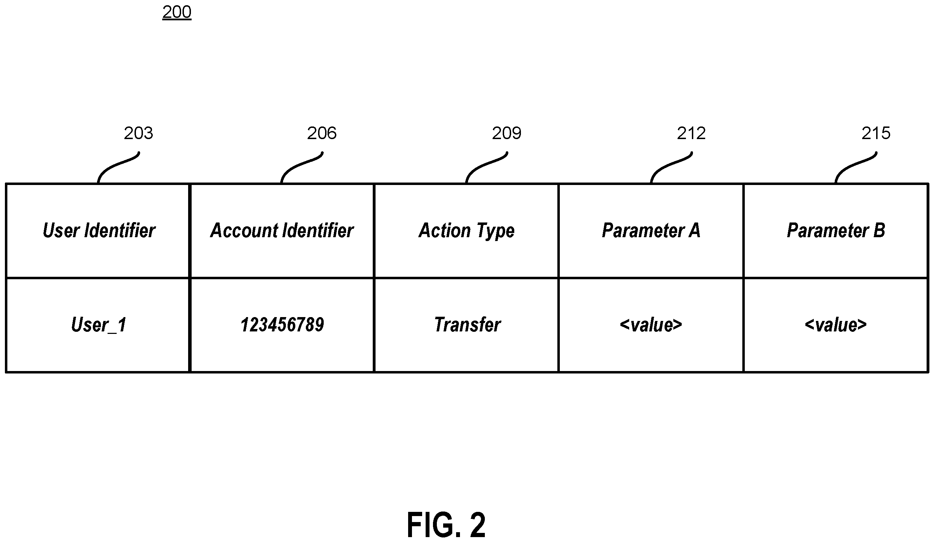

FIG. 2 illustrates a data structure 200 of an authentication request. Data structure 200 may include field 203 that stores a user identifier. The user identifier may be a string, a number, an alphanumeric string, or another suitable user identifier. Field 206 may include an account identifier related to the action. For example, the account identifier may be an email address. In some embodiments, the account identifier may be a financial account such as a checking account, a savings account, a credit card account, or another suitable financial account. Field 209 may indicate an action type. For example, an action type may be a login, a currency transfer, or another suitable action type. Field 212 and field 215 may include one or more other parameters. For example, field 212 may include a currency amount and field 215 may include a target account number or another suitable target of the transfer.

When the request is received, machine learning subsystem 114 may derive one or more natural language representations of the action. In particular, machine learning subsystem 114 may obtain, based on the plurality of parameters, a plurality of natural language representations of the action. In some embodiments, machine learning subsystem 114 may use a large language model for generating the natural language representations. In particular, machine learning subsystem 114 may input the plurality of parameters into a large language model to obtain a plurality of textual representations of the plurality of parameters. Each textual representation of the plurality of textual representations may be a natural language description of the plurality of parameters. For example, machine learning subsystem 114 may generate a prompt for the large language model. The prompt may instruct the large language model to generate a natural language representation of values to follow. The values may be one or more of the parameter values received as part of the communication (e.g., as part of the authentication request).

In some embodiments, the prompt may request that the large language model generate a single natural language representation based on the parameters of the request. However, in some embodiments, the prompt may request generation of multiple natural language representations. Multiple natural language representations may enable a better comparison for matching operations described later in this disclosure. When the large language model outputs the one or more natural language representations, machine learning subsystem 114 may store the received natural language representations in memory.

In some embodiments, the natural language representations may be obtained without using a large language model. For example, machine learning subsystem 114 may use templates in combination with parameters to generate the natural language representations. In particular, machine learning subsystem 114 may generate a query that includes one or more parameter names of the plurality of parameters and transmit the query to a database system. The query may request that the database system find natural language templates related to a particular parameter set that is sent with the query. The database system may search the database based on the query, and transmit the results back to machine learning subsystem 114. Machine learning subsystem 114 may receive, from the database system, a plurality of natural language templates, and generate natural language representations based on those templates.

In some embodiments, machine learning subsystem 114 may generate the plurality of natural language representations based on the plurality of natural language templates and the plurality of parameters. In particular, machine learning subsystem 114 may iterate through each template and determine which parameters (e.g., based on parameter names) should be added to the one or more templates to turn those templates into natural language representations. For example, a particular template may call for a name of the application, a type of action, and an amount associated with the action. That is, the template may call for a banking application, such that the type of action is a wire transfer, and the amount is a sum of currency transferred. Machine learning subsystem 114 may fill in the information in the template and generate a natural language representation from that template. Machine learning subsystem 114 may then proceed with authenticating the user and/or the application.

Machine learning subsystem 114 may transmit (e.g., via communication subsystem 112) a message to a user to perform authentication. In particular, machine learning subsystem 114 may transmit, to a user device of the user, a second communication that includes a prompt for the user to describe the action. For example, machine learning subsystem 114 may transmit an SMS message to the user device with a prompt to enter a natural language description of the action. The SMS message may be transmitted to a telephone number associated with the user and/or the user's mobile device. For example, the SMS message may indicate that an action has been performed in relation to an application or to a user and may prompt the user to enter the details of the action. The user may enter, for example, "I am trying to wire $2,000 to my friend at Capital One bank."

In some embodiments, machine learning subsystem 114 may give some context to the user when generating a prompt, as the user may be confused about what the system is requiring. In particular, machine learning subsystem 114 may determine a low-security subset of the plurality of parameters and may generate the prompt that includes the low-security subset of the plurality of parameters. For example, the communication (e.g., a request for authentication) may include a security flag for each parameter indicating whether the parameter is low security or high security. Parameters such as application name may be low-security parameters while particular action details may be high-security parameters. Thus, the prompt may request that the user describe the action requested under the "Capital One" application.

In some embodiments, machine learning subsystem 114 may use a large language model for generating a prompt. In particular, machine learning subsystem 114 may input the low-security subset of the plurality of parameters into a large language model to obtain a custom prompt related to the action. For example, machine learning subsystem 114 may determine that an application name is a low-security parameter. Thus, machine learning subsystem 114 may generate a request (e.g., a prompt) to the large language model to generate a natural language query for a user to describe a user's activity related to the application and include the application name with the prompt. Machine learning subsystem 114 may receive, in response to the query, a natural language query and generate a message to the user. Machine learning subsystem 114 may then transmit the message (e.g., via SMS) to the user. In some embodiments, the message may be transmitted to the user through an application on the user device. For example, machine learning subsystem 114 may identify a device already associated with the user and determine that the application having the application name within the original communication is installed on the device. Thus, machine learning subsystem 114 may send the prompt through that application.

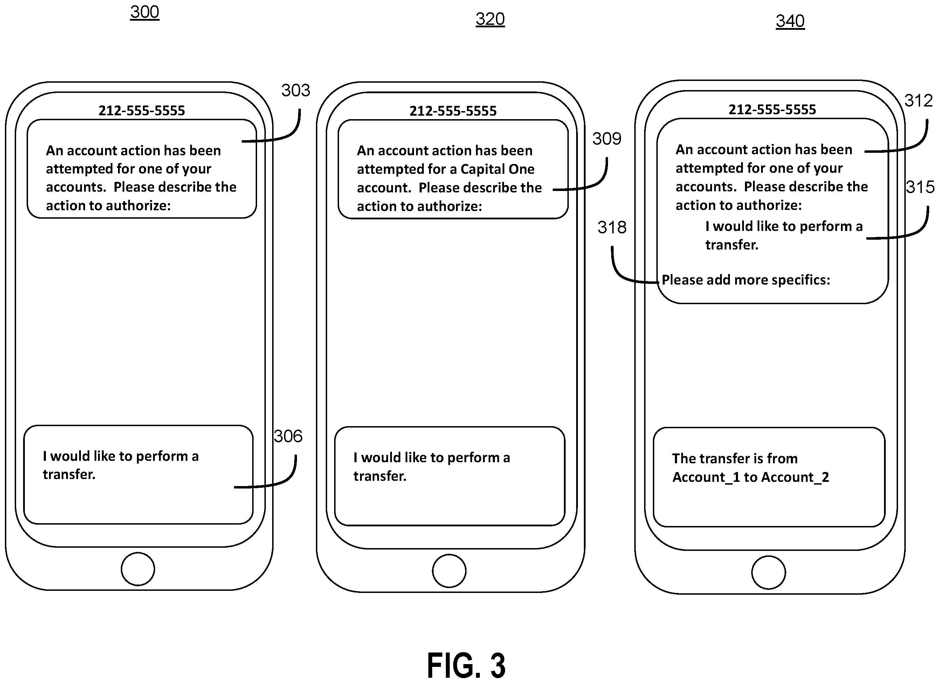

FIG. 3 illustrates user interface examples on a mobile device. User interface 300 illustrates an SMS message screen or another suitable message screen of a mobile device. Prompt 303 illustrates a prompt described herein. Field 306 illustrates a response area where a user is able to input the response to the prompt. User interface 320 illustrates prompt 309, which includes some contextual information (e.g., based on low-security parameters as described above). In particular, prompt 309 indicates the name of the account and/or application. User interface 340 illustrates a prompt 312 asking a user to describe an action and a response 315 from the user. In this instance, as will be described further in this disclosure, user authentication system 102 is unable to determine whether the user is describing the correct transaction. Accordingly, user authentication system 102 has generated prompt 318 enabling the user to elaborate on or give more details about the transaction.

When the user inputs a response to the prompt, the mobile device may send the response to user authentication system 102. User authentication system 102 may receive, from the user device, a natural language response to the prompt. In some embodiments, the response may include textual data (e.g., an SMS message) describing the action. In another example, the response may be received via an application installed on the mobile device. In particular, if the action is related to a financial account of the user, the message exchange may be via the application associated with the financial account. In some embodiments, user authentication system 102 may receive the response using communication subsystem 112 and may pass the response or a pointer to the response in memory to machine learning subsystem 114.

Machine learning subsystem 114 may use a machine learning model to determine whether the user's response to the prompt corresponds to any natural language representations generated from the parameters associated with the action. In particular, machine learning subsystem 114 may input the natural language response and the plurality of natural language representations into a machine learning model to obtain an indication of whether the natural language response corresponds to one or more natural language representations of the plurality of natural language representations. The machine learning model may be a model that has been trained to determine whether natural language representations describe a matching action. For example, the natural language response may be textual data and the plurality of natural language representations may also include textual data. Accordingly, machine learning subsystem 114 may input that textual data into a machine learning model that is trained to determine whether two textual representations describe a matching action. For example, the machine learning model may determine a context associated with each natural language representation and the natural language response and then may determine whether at least one natural language representation matches or corresponds to the natural language response based on the determined contexts.

In some embodiments, the machine learning model may be trained as a similarity model. That is, the machine learning model may be trained to compare two natural language phrases and determine whether those phrases describe the same subject matter. Accordingly, machine learning subsystem 114 may input each natural language representation into the machine learning model together with the natural language response to determine whether there is a match between one of the natural language representations and the natural language response. In some embodiments, machine learning subsystem 114 may use a single natural language representation of the action instead of using multiple natural language representations. Thus, machine learning subsystem 114 may input the natural language representation and the natural language response into the machine learning model to determine a match.

In some embodiments, the natural language response and/or the one or more natural language representations may be in the form of voice data. Thus, machine learning subsystem 114 may input the voice data into the machine learning model for analysis. In some embodiments, the voice data may be transformed into textual data (e.g., a voice response to a prompt). That is, the natural language response may be a voice response while the natural language representations may be textual. Accordingly, machine learning subsystem 114 may transform the voice data into textual data.

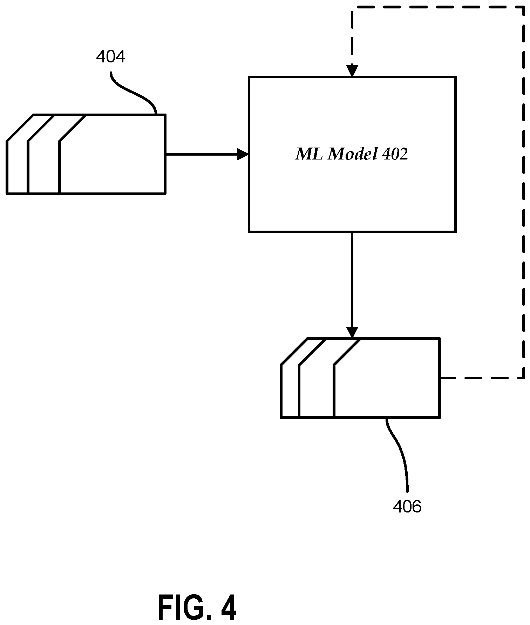

FIG. 4 illustrates an exemplary machine learning model. The machine learning model may have been trained using textual data, for example, textual data representing natural language responses and corresponding natural language representations of actions. Machine learning model 402 may take input 404 (e.g., one or more natural language representations and a natural language response described above) and may return output 406 indicating whether one or more natural language representations match the natural language response. The output parameters may be fed back to the machine learning model as input to train the machine learning model (e.g., alone or in conjunction with user indications of the accuracy of outputs, labels associated with the inputs, or other reference feedback information). The machine learning model may update its configurations (e.g., weights, biases, or other parameters) based on the assessment of its prediction (e.g., of an information source) and reference feedback information (e.g., user indication of accuracy, reference labels, or other information). Connection weights may be adjusted, for example, if the machine learning model is a neural network, to reconcile differences between the neural network's prediction and the reference feedback. One or more neurons of the neural network may require that their respective errors be sent backward through the neural network to facilitate the update process (e.g., backpropagation of error). Updates to the connection weights may, for example, be reflective of the magnitude of error propagated backward after a forward pass has been completed. In this way, for example, the machine learning model may be trained to generate better predictions of information sources that are responsive to a query.

In some embodiments, the machine learning model may include an artificial neural network. In such embodiments, the machine learning model may include an input layer and one or more hidden layers. Each neural unit of the machine learning model may be connected to one or more other neural units of the machine learning model. Such connections may be enforcing or inhibitory in their effect on the activation state of connected neural units. Each individual neural unit may have a summation function, which combines the values of all of its inputs together. Each connection (or the neural unit itself) may have a threshold function that a signal must surpass before it propagates to other neural units. The machine learning model may be self-learning and/or trained, rather than explicitly programmed, and may perform significantly better in certain areas of problem solving, as compared to computer programs that do not use machine learning. During training, an output layer of the machine learning model may correspond to a classification of machine learning model, and an input known to correspond to that classification may be input into an input layer of the machine learning model during training. During testing, an input without a known classification may be input into the input layer, and a determined classification may be output.

A machine learning model may include embedding layers in which each feature of a vector is converted into a dense vector representation. These dense vector representations for each feature may be pooled at one or more subsequent layers to convert the set of embedding vectors into a single vector.

The machine learning model may be structured as a factorization machine model. The machine learning model may be a non-linear model and/or supervised learning model that can perform classification and/or regression. For example, the machine learning model may be a general-purpose supervised learning algorithm that the system uses for both classification and regression tasks. Alternatively, the machine learning model may include a Bayesian model configured to perform variational inference on the graph and/or vector.

When the machine learning model determines whether there is a match between the natural language response and one or more natural language representations of the action, the machine learning model may output one or more indications of a match. The indications may be output as Boolean values, percentages, scores, or other suitable indications. In some embodiments, the output may be an indication of a match between the natural language response and one or more natural language representations. Machine learning subsystem 114 may pass the indication or indications to message generating subsystem 116. Message generating subsystem 116 may include software components, hardware components, or a combination of both. For example, message generating subsystem 116 may include software components (e.g., that are able to execute API calls for generating various messages) that generate messages to be sent to the mobile device in response to determining whether a match has been found between the natural language response and one or more natural language representations.

In some embodiments, message generating subsystem 116 may, based on determining that the natural language response corresponds to the one or more natural language representations of the plurality of natural language representations, generate a third communication indicating that the action has been authenticated. For example, message generating subsystem 116 may determine that a score, a percentage, a Boolean, or another suitable indication indicates that the natural language response matches or corresponds to one or more natural language representations. In response, message generating subsystem 116 may transmit an SMS message back to the mobile device indicating that the action has been authenticated and that the action will proceed to be completed. In some embodiments, message generating subsystem 116 may transmit the message through the application associated with the action.

In some embodiments, the natural language response may include textual data and the natural language representations may be textual representations. Accordingly, message generating subsystem 116 may, based on determining that the textual data matches the one or more textual representations, generate an authentication flag indicating that the action has been authenticated. The authentication flag may be a Boolean, a score, a percentage, or another suitable flag. In some embodiments, matching may indicate context matching. In some embodiments, several levels of matching may mean matching. For example, the textual data may match on one level (e.g., general context may match) and may not match on another level (e.g., the words are not exact).

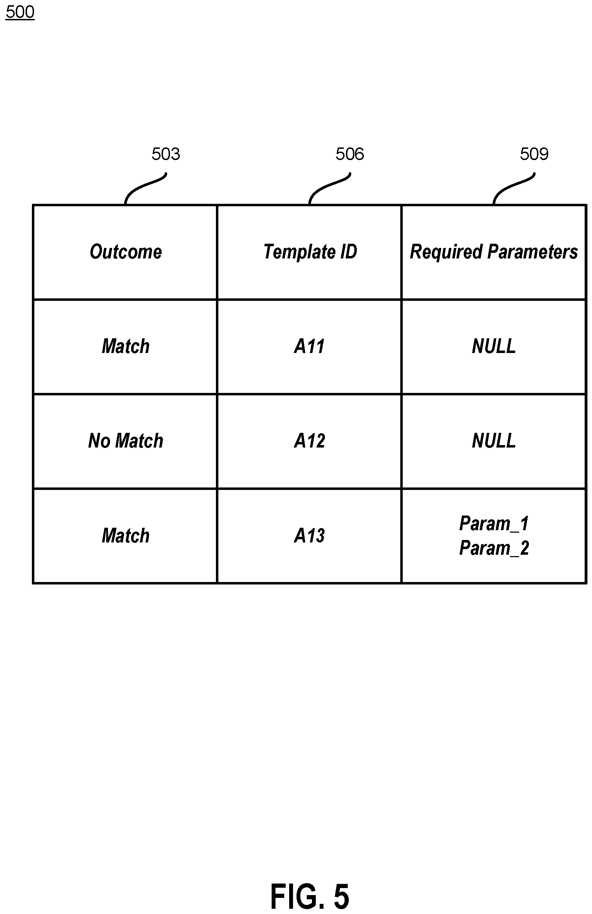

In some embodiments, message generating subsystem 116 may use one or more templates to generate a response. FIG. 5 illustrates a data structure 500 (e.g., a database table) that may store one or more templates for responding to a user. Field 503 indicates an outcome of the machine learning. For example, field 503 may indicate that there is a match or no match. Field 506 may store a corresponding template identifier. Accordingly, message generating subsystem 116 may retrieve the template (e.g., from a database or another suitable location) based on the template identifier. Field 509 includes the required parameters for a particular template. For example, some templates may include no parameters as those templates may simply be used to generate a message that indicates whether authentication has been successful or has failed. Other messages may require parameters to be input into the template. For example, some required parameters may include the name of the application, an account identifier, a user identifier, and/or other suitable parameters. Accordingly, message generating subsystem 116 may generate a communication to the user (e.g., an SMS message) based on a selected template. In some embodiments, the template may be selected based on user preferences and/or other criteria.

In some embodiments, message generating subsystem 116 may receive an indication that the natural language response does not match any of the one or more natural language representations. In particular, based on determining that the natural language response does not match the one or more natural language representations of the plurality of natural language representations, message generating subsystem 116 may generate a fourth communication indicating that the action has not been authenticated. For example, the fourth communication may be an SMS message indicating that the authentication has failed and that the action will not be executed. In some embodiments, message generating subsystem 116 may use a template as shown in FIG. 5 to generate the message. That is, message generating subsystem 116 may search field 503 for an outcome indicating no match and may select a template based on the outcome.

In some embodiments, message generating subsystem 116 may generate a warning message for the user. In particular, message generating subsystem 116 may generate a warning message for the user that includes one or more parameters associated with the action. The warning message may indicate a security issue. For example, the one or more parameters may include the originating mobile device and/or location of that originating mobile device. Some other parameters may include the name of the application and/or other suitable parameters. Message generating subsystem 116 may then transmit the warning message to the user device of the user to be displayed on the mobile device of the user. The warning message may be transmitted as an SMS message or another suitable message such as a message through an application associated with the action.

In some embodiments, machine learning subsystem 114 may not be able to determine whether there is a match between the natural language response and the one or more natural language representations. In particular, machine learning subsystem 114 may receive from the machine learning model a score (e.g., a percentage) below a first threshold that indicates that the natural language response matches the one or more natural language representations of the plurality of natural language representations and above a second threshold that indicates that the natural language response does not match the one or more natural language representations of the plurality of natural language representations. For example, machine learning subsystem 114 may have a particular set of percentages or scores indicating that there is a match or an absence of a match. A score of 80*%* or above may mean a match and 50*%* or below may mean no match. Accordingly, the scores between 50*%* and 80*%* may not show a good indication of whether there is a match.

If machine learning subsystem 114 is unable to determine whether there is a match, machine learning subsystem 114 may attempt one or more additional methods of authentication. Thus, in response to receiving a score that does not indicate either a match or no match, machine learning subsystem 114 may authenticate the action using a different channel. Accordingly, machine learning subsystem 114 may pass the indication to message generating subsystem 116. Message generating subsystem 116 may determine a different channel of authentication (e.g., based on an email on file) and may transmit a message using the different channel (e.g., via email). Message generating subsystem 116 may then wait for a response from the user via that different channel.

Message generating subsystem 116 may then receive (e.g., using communication subsystem 112) a message indicating that the action has been authenticated using the different channel. For example, user authentication system 102 may receive an email response from the user and may proceed to authenticate the email response (e.g., via machine learning subsystem 114) using a machine learning model as described above. Machine learning subsystem 114 may determine whether the user's response via the different channel matches the one or more natural language representations. Based on determining that the natural language response has been authenticated, machine learning subsystem 114 may retrain the machine learning model. In particular, in response to receiving the message that the action has been authenticated using the different channel, message generating subsystem 116 may execute a training routine of the machine learning model to train the machine learning model based on the score and a matching natural language representation.

In some embodiments, instead of or in addition to performing authentication using a different authentication channel, user authentication system 102 may perform additional authentication using the same channel. As shown in user interface 340 of FIG. 3, message generating subsystem 116 may generate an additional prompt to the user for further authentication. Thus, message generating subsystem 116 may receive from the machine learning model a score below a first threshold that indicates that the natural language response matches the one or more natural language representations of the plurality of natural language representations and above a second threshold that indicates that the natural language response does not match the one or more natural language representations of the plurality of natural language representations. As described above, the score may indicate that user authentication system 102 is unable to determine whether a match has occurred.

In response to receiving the score, message generating subsystem 116 may select a parameter of the plurality of parameters and generate an additional prompt that includes a natural language query requesting a value associated with the parameter. For example, message generating subsystem 116 may select an application name parameter and/or other low-security parameters as described above and generate an additional prompt for the user. Message generating subsystem 116 may send the additional prompt as an SMS message or another suitable message to the user's mobile device. When the user's mobile device receives the additional prompt, the user may add more information. In some embodiments, the additional prompt may be a specific query regarding the action (e.g., the prompt may ask for an amount associated with a wire transaction). Message generating subsystem 116 may then receive a response to the additional prompt and pass the response to machine learning subsystem 114. Machine learning subsystem 114 may combine the original natural language response and the additional response into a single response and input the combination into the machine learning model together with one or more natural language representations to determine a match. In some embodiments, machine learning subsystem 114 may simply compare the parameter that the prompt is asking to input with the parameter from the original communication requesting authentication. For example, if machine learning subsystem 114 is requesting an amount of the transaction, machine learning subsystem 114 may compare the amount value received from the user with the amount value from the authentication request.

### Computing Environment

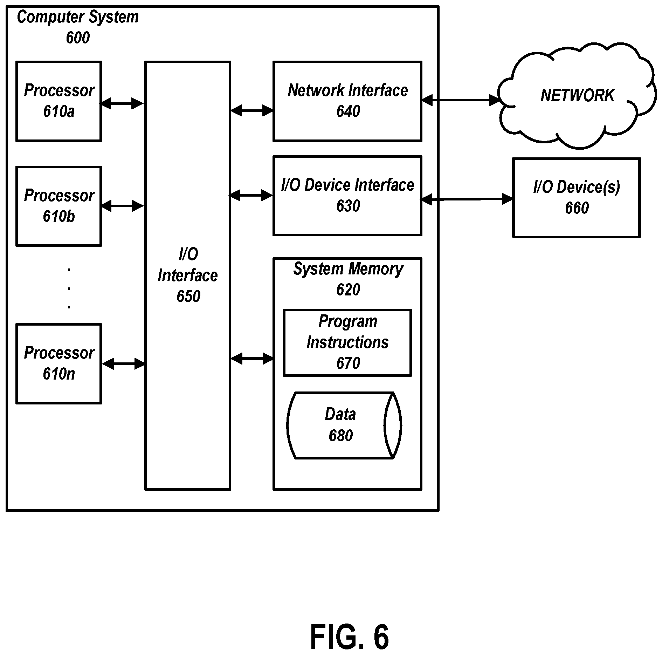

FIG. 6 shows an example computing system that may be used in accordance with some embodiments of this disclosure. In some instances, computing system 600 is referred to as a computer system 600. A person skilled in the art would understand that those terms may be used interchangeably. The components of FIG. 6 may be used to perform some or all operations discussed in relation to FIGs. 1-5. Furthermore, various portions of the systems and methods described herein may include or be executed on one or more computer systems similar to computing system 600. Further, processes and modules described herein may be executed by one or more processing systems similar to that of computing system 600.

Computing system 600 may include one or more processors (e.g., processors 610a-610n) coupled to system memory 620, an input/output (I/O) device interface 630, and a network interface 640 via an I/O interface 650. A processor may include a single processor, or a plurality of processors (e.g., distributed processors). A processor may be any suitable processor capable of executing or otherwise performing instructions. A processor may include a central processing unit (CPU) that carries out program instructions to perform the arithmetical, logical, and input/output operations of computing system 600. A processor may execute code (e.g., processor firmware, a protocol stack, a database management system, an operating system, or a combination thereof) that creates an execution environment for program instructions. A processor may include a programmable processor. A processor may include general or special purpose microprocessors. A processor may receive instructions and data from a memory (e.g., system memory 620). Computing system 600 may be a uni-processor system including one processor (e.g., processor 610a), or a multi-processor system including any number of suitable processors (e.g., 610a-610n). Multiple processors may be employed to provide for parallel or sequential execution of one or more portions of the techniques described herein. Processes, such as logic flows, described herein may be performed by one or more programmable processors executing one or more computer programs to perform functions by operating on input data and generating corresponding output. Processes described herein may be performed by, and apparatus can also be implemented as, special purpose logic circuitry, e.g., an FPGA (field-programmable gate array) or an ASIC (application-specific integrated circuit). Computing system 600 may include a plurality of computing devices (e.g., distributed computer systems) to implement various processing functions.

I/O device interface 630 may provide an interface for connection of one or more I/O devices 660 to computer system 600. I/O devices may include devices that receive input (e.g., from a user) or output information (e.g., to a user). I/O devices 660 may include, for example, a graphical user interface presented on displays (e.g., a cathode ray tube (CRT) or liquid crystal display (LCD) monitor), pointing devices (e.g., a computer mouse or trackball), keyboards, keypads, touchpads, scanning devices, voice recognition devices, gesture recognition devices, printers, audio speakers, microphones, cameras, or the like. I/O devices 660 may be connected to computer system 600 through a wired or wireless connection. I/O devices 660 may be connected to computer system 600 from a remote location. I/O devices 660 located on remote computer systems, for example, may be connected to computer system 600 via a network and network interface 640.

Network interface 640 may include a network adapter that provides for connection of computer system 600 to a network. Network interface 640 may facilitate data exchange between computer system 600 and other devices connected to the network. Network interface 640 may support wired or wireless communication. The network may include an electronic communication network, such as the Internet, a local area network (LAN), a wide area network (WAN), a cellular communications network, or the like.

System memory 620 may be configured to store program instructions 670 or data 680. Program instructions 670 may be executable by a processor (e.g., one or more of processors 610a-610n) to implement one or more embodiments of the present techniques. Program instructions 670 may include modules of computer program instructions for implementing one or more techniques described herein with regard to various processing modules. Program instructions may include a computer program (which in certain forms is known as a program, software, software application, script, or code). A computer program may be written in a programming language, including compiled or interpreted languages, or declarative or procedural languages. A computer program may include a unit suitable for use in a computing environment, including as a stand-alone program, a module, a component, or a subroutine. A computer program may or may not correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program may be deployed to be executed on one or more computer processors located locally at one site, or distributed across multiple remote sites and interconnected by a communication network.

System memory 620 may include a tangible program carrier having program instructions stored thereon. A tangible program carrier may include a non-transitory, computer-readable storage medium. A non-transitory, computer-readable storage medium may include a machine-readable storage device, a machine-readable storage substrate, a memory device, or any combination thereof. A non-transitory, computer-readable storage medium may include nonvolatile memory (e.g., flash memory, ROM, PROM, EPROM, EEPROM), volatile memory (e.g., random access memory (RAM), static random access memory (SRAM), synchronous dynamic RAM (SDRAM)), bulk storage memory (e.g., CD-ROM and/or DVD-ROM, hard drives), or the like. System memory 620 may include a non-transitory, computer-readable storage medium that may have program instructions stored thereon that are executable by a computer processor (e.g., one or more of processors 610a-610n) to cause the subject matter and the functional operations described herein. A memory (e.g., system memory 620) may include a single memory device and/or a plurality of memory devices (e.g., distributed memory devices).

I/O interface 650 may be configured to coordinate I/O traffic between processors 610a-610n, system memory 620, network interface 640, I/O devices 660, and/or other peripheral devices. I/O interface 650 may perform protocol, timing, or other data transformations to convert data signals from one component (e.g., system memory 620) into a format suitable for use by another component (e.g., processors 610a-610n). I/O interface 650 may include support for devices attached through various types of peripheral buses, such as a variant of the Peripheral Component Interconnect (PCI) bus standard or the Universal Serial Bus (USB) standard.

Embodiments of the techniques described herein may be implemented using a single instance of computer system 600, or multiple computer systems 600 configured to host different portions or instances of embodiments. Multiple computer systems 600 may provide for parallel or sequential processing/execution of one or more portions of the techniques described herein.

Those skilled in the art will appreciate that computer system 600 is merely illustrative, and is not intended to limit the scope of the techniques described herein. Computer system 600 may include any combination of devices or software that may perform or otherwise provide for the performance of the techniques described herein. For example, computer system 600 may include or be a combination of a cloud-computing system, a data center, a server rack, a server, a virtual server, a desktop computer, a laptop computer, a tablet computer, a server device, a client device, a mobile telephone, a personal digital assistant (PDA), a mobile audio or video player, a game console, a vehicle-mounted computer, a Global Positioning System (GPS), or the like. Computer system 600 may also be connected to other devices that are not illustrated, or may operate as a stand-alone system. In addition, the functionality provided by the illustrated components may, in some embodiments, be combined in fewer components, or distributed in additional components. Similarly, in some embodiments, the functionality of some of the illustrated components may not be provided, or other additional functionality may be available.

### Operation Flow

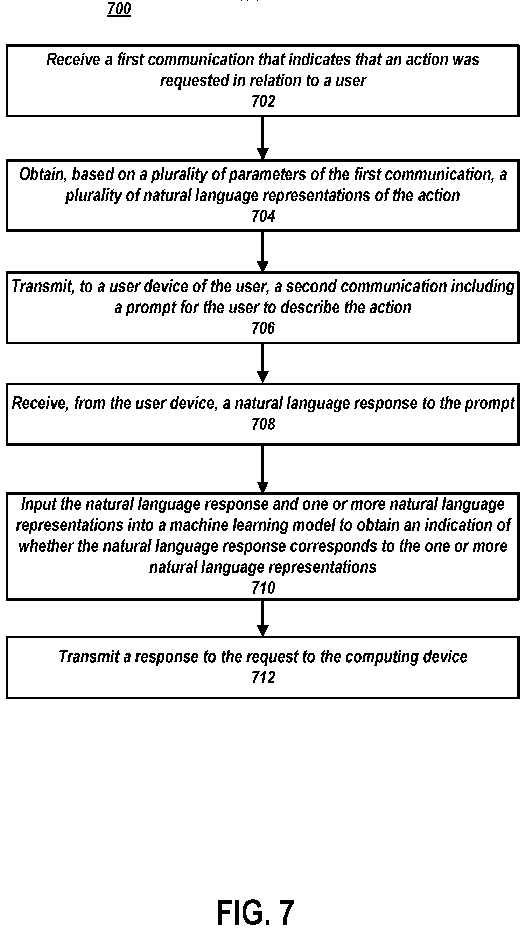

FIG. 7 is a flowchart of operations 700 for authenticating user actions. The operations of FIG. 7 may use components described in relation to FIG. 6. In some embodiments, user authentication system 102 may include one or more components of computer system 600. At 702, user authentication system 102 receives a first communication that indicates that an action was requested in relation to a user. For example, user authentication system 102 may receive the communication from one of user devices 108a-108n (e.g., mobile device 108a) such that the communication may include a plurality of parameters. User authentication system 102 may receive the communication over network 150 using network interface 640. In some embodiments, user authentication system 102 may receive the communication from user device 108n, which may be unknown to user authentication system 102.

At 704, user authentication system 102 obtains, based on a plurality of parameters of the first communication, a plurality of natural language representations of the action. For example, user authentication system 102 may obtain the natural language representations from a database on data node 104 and/or from a large language model. The large language model may be a machine learning model (e.g., as described in relation to FIG. 4) trained using a corpus of training data to perform next word predictions.

At 706, user authentication system 102 transmits, to a user device of the user, a second communication including a prompt for the user to describe the action. User authentication system 102 may use network interface 640 to transmit the second communication over network 150. At 708, user authentication system 102 receives, from the user device, a natural language response to the prompt. User authentication system 102 may use network interface 640 to receive the response over network 150. User authentication system 102 may store the response in system memory 620.

At 710, user authentication system 102 inputs the natural language response and one or more natural language representations into a machine learning model to obtain an indication of whether the natural language response matches the one or more natural language representations. User authentication system 102 may use one or more processors 610a, 610b, and/or 610n to perform this operation. At 712, user authentication system 102 transmits a response to the request to the computing device. User authentication system 102 may use network interface 640 to transmit the response over network 150.

Although the present invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

The above-described embodiments of the present disclosure are presented for purposes of illustration, and not of limitation, and the present disclosure is limited only by the claims which follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method comprising: receiving a first communication that indicates that an action was requested in relation to a user, wherein the first communication comprises a plurality of parameters associated with the action; obtaining, based on the plurality of parameters, a plurality of natural language representations of the action; transmitting, to a user device of the user, a second communication comprising a prompt for the user to describe the action; receiving, from the user device, a natural language response to the prompt; inputting the natural language response and the plurality of natural language representations into a machine learning model to obtain an indication of whether the natural language response matches one or more natural language representations of the plurality of natural language representations, wherein the machine learning model has been trained to determine whether natural language representations describe a matching action; and based on determining that the natural language response matches the one or more natural language representations of the plurality of natural language representations, generating a third communication indicating that the action has been authenticated.
2. The preceding embodiment, further comprising, based on determining that the natural language response does not match the one or more natural language representations of the plurality of natural language representations, generating a fourth communication indicating that the action has not been authenticated.
3. Any of the preceding embodiments, further comprising: generating a warning message for the user, wherein the warning message comprises one or more parameters associated with the action and wherein the warning message indicates a security issue; and transmitting the warning message to the user device of the user.
4. Any of the preceding embodiments, further comprising: determining a low-security subset of the plurality of parameters; and generating the prompt comprising the low-security subset of the plurality of parameters.
5. Any of the preceding embodiments, wherein generating the prompt comprises inputting the low-security subset of the plurality of parameters into a large language model to obtain a custom prompt related to the action.
6. Any of the preceding embodiments, further comprising: receiving from the machine learning model a score below a first threshold that indicates that the natural language response matches the one or more natural language representations of the plurality of natural language representations and above a second threshold that indicates that the natural language response does not match the one or more natural language representations of the plurality of natural language representations; and in response to receiving the score, authenticating the action using a different channel.
7. Any of the preceding embodiments, further comprising: receiving a message indicating that the action has been authenticated using the different channel; and in response to receiving the message that the action has been authenticated using the different channel, executing a training routine of the machine learning model to train the machine learning model based on the score and a matching natural language representation.
8. Any of the preceding embodiments, wherein obtaining the plurality of natural language representations of the action comprises inputting the plurality of parameters into a large language model with an instruction to generate natural language phrases based on the plurality of parameters.
9. Any of the preceding embodiments, further comprising: receiving from the machine learning model a score below a first threshold that indicates that the natural language response matches the one or more natural language representations of the plurality of natural language representations and above a second threshold that indicates that the natural language response does not match the one or more natural language representations of the plurality of natural language representations; in response to receiving the score, selecting a parameter of the plurality of parameters; and generating an additional prompt comprising a natural language query requesting a value associated with the parameter.
10. Any of the preceding embodiments, wherein transmitting, to the user device of the user, the second communication comprising the prompt for the user to describe the action comprises transmitting a short message service message to a telephone number associated with the user.
11. Any of the preceding embodiments, wherein obtaining, based on the plurality of parameters, the plurality of natural language representations of the action comprises: transmitting, to a database system, a query comprising one or more parameter names associated with the plurality of parameters; receiving, from the database system, a plurality of natural language templates; and generating the plurality of natural language representations based on the plurality of natural language templates and the plurality of parameters.
12. A tangible, non-transitory, machine-readable medium storing instructions that, when executed by a data processing apparatus, cause the data processing apparatus to perform operations comprising those of any of embodiments 1-11.
13. A system comprising: one or more processors; and memory storing instructions that, when executed by the processors, cause the processors to effectuate operations comprising those of any of embodiments 1-11.
14. A system comprising means for performing any of embodiments 1-11.
15. A system comprising cloud-based circuitry for performing any of embodiments 1-11.
Various aspects and embodiments of the invention are set out in the following numbered paragraphs (NPs):
NP 1. A system for authenticating user actions, the system comprising:
   one or more processors; and
   a non-transitory, computer-readable storage medium storing instructions that when executed by the one or more processors cause the one or more processors to:
      receive an authentication request that indicates that an action was requested in relation to a user, wherein the authentication request comprises a plurality of parameters associated with the action;
      input the plurality of parameters into a large language model to obtain a plurality of textual representations of the plurality of parameters, wherein each textual representation of the plurality of textual representations comprises a natural language description of the plurality of parameters;
      transmit, to a user device of the user, a short message service message comprising a prompt for the user to describe the action as part of an authentication process;
      receive, from the user device, textual data comprising a response to the prompt;
      input the textual data and the plurality of textual representations into a machine learning model to obtain an indication of whether the textual data matches one or more textual representations of the plurality of textual representations, wherein the machine learning model has been trained to determine whether two textual representations describe a matching action; and
      based on determining that the textual data matches the one or more textual representations, generate an authentication flag indicating that the action has been authenticated.
NP 2. A method comprising:
   receiving a first communication that indicates that an action was requested in relation to a user, wherein the first communication comprises a plurality of parameters associated with the action;
   obtaining, based on the plurality of parameters, a plurality of natural language representations of the action;
   transmitting, to a user device of the user, a second communication comprising a prompt for the user to describe the action;
   receiving, from the user device, a natural language response to the prompt;
   inputting the natural language response and the plurality of natural language representations into a machine learning model to obtain an indication of whether the natural language response corresponds to one or more natural language representations of the plurality of natural language representations, wherein the machine learning model has been trained to determine whether natural language representations describe a matching action; and
   based on determining that the natural language response corresponds to the one or more natural language representations of the plurality of natural language representations, generating a third communication indicating that the action has been authenticated.
NP 3. The method of NP 2, further comprising, based on determining that the natural language response does not match the one or more natural language representations of the plurality of natural language representations, generating a fourth communication indicating that the action has not been authenticated.
NP 4. The method of NP 3, further comprising:
   generating a warning message for the user, wherein the warning message comprises one or more parameters associated with the action and wherein the warning message indicates a security issue; and
   transmitting the warning message to the user device of the user.
NP 5. The method of NP 2, further comprising:
   determining a low-security subset of the plurality of parameters; and
   generating the prompt comprising the low-security subset of the plurality of parameters.
NP 6. The method of NP 5, wherein generating the prompt comprises inputting the low-security subset of the plurality of parameters into a large language model to obtain a custom prompt related to the action.
NP 7. The method of NP 2, further comprising:
   receiving from the machine learning model a score below a first threshold that indicates that the natural language response corresponds to the one or more natural language representations of the plurality of natural language representations and above a second threshold that indicates that the natural language response does not match the one or more natural language representations of the plurality of natural language representations; and
   in response to receiving the score, authenticating the action using a different channel.
NP 8. The method of NP 7, further comprising:
   receiving a message indicating that the action has been authenticated using the different channel; and
   in response to receiving the message that the action has been authenticated using the different channel, executing a training routine of the machine learning model to train the machine learning model based on the score and a matching natural language representation.
NP 9. The method of NP 2, wherein obtaining the plurality of natural language representations of the action comprises inputting the plurality of parameters into a large language model with an instruction to generate natural language phrases based on the plurality of parameters.
NP 10. The method of NP 2, further comprising:
   receiving from the machine learning model a score below a first threshold that indicates that the natural language response corresponds to the one or more natural language representations of the plurality of natural language representations and above a second threshold that indicates that the natural language response does not match the one or more natural language representations of the plurality of natural language representations;
   in response to receiving the score, selecting a parameter of the plurality of parameters; and
   generating an additional prompt comprising a natural language query requesting a value associated with the parameter.
NP 11. The method of NP 2, wherein transmitting, to the user device of the user, the second communication comprising the prompt for the user to describe the action comprises transmitting a short message service message to a telephone number associated with the user.
NP 12. The method of NP 2, wherein obtaining, based on the plurality of parameters, the plurality of natural language representations of the action comprises:
   transmitting, to a database system, a query comprising one or more parameter names associated with the plurality of parameters;
   receiving, from the database system, a plurality of natural language templates; and
   generating the plurality of natural language representations based on the plurality of natural language templates and the plurality of parameters.
NP 13. One or more non-transitory, computer-readable storage media storing instructions that when executed by one or more processors cause operations comprising:
   receiving a first communication that indicates that an action was requested in relation to a user, wherein the first communication comprises a plurality of parameters associated with the action;
   obtaining, based on the plurality of parameters, a natural language representation of the action;
   transmitting, to a user device of the user, a second communication, comprising a prompt for the user to describe the action;
   receiving, from the user device, a natural language response to the prompt;
   inputting the natural language response and the natural language representation into a machine learning model to obtain an indication of whether the natural language response corresponds to the natural language representation, wherein the machine learning model has been trained to determine whether two natural language representations have matching subject matter; and
   based on determining that the natural language response corresponds to the natural language representation, generating a third communication indicating that the action has been authenticated.
NP 14. The one or more non-transitory, computer-readable storage media of NP 13, wherein the instructions further cause the one or more processors to, based on determining that the natural language response does not match the natural language representation, generate a fourth communication indicating that the action has not been authenticated.
NP 15. The one or more non-transitory, computer-readable storage media of NP 14, wherein the instructions further cause the one or more processors to perform operations comprising:
   generating a warning message for the user, wherein the warning message comprises one or more parameters associated with the action and wherein the warning message indicates a security issue; and
   transmitting the warning message to the user device of the user.
NP 16. The one or more non-transitory, computer-readable storage media of NP 13, wherein the instructions further cause the one or more processors to perform operations comprising:
   determining a low-security subset of the plurality of parameters; and
   generating the prompt comprising the low-security subset of the plurality of parameters.
NP 17. The one or more non-transitory, computer-readable storage media of NP 16, wherein the instructions for generating the prompt further cause the one or more processors to input the low-security subset of the plurality of parameters into a large language model to obtain a custom prompt related to the action.
NP 18. The one or more non-transitory, computer-readable storage media of NP 13, wherein the instructions further cause the one or more processors to perform operations comprising:
   receiving from the machine learning model a score below a first threshold that indicates that the natural language response corresponds to the natural language representation and above a second threshold that indicates that the natural language response does not match the natural language representation; and
   in response to receiving the score, authenticating the action using a different channel.
NP 19. The one or more non-transitory, computer-readable storage media of NP 13, wherein the instructions further cause the one or more processors to perform operations comprising:
   receiving from the machine learning model a score below a first threshold that indicates that the natural language response corresponds to the natural language representation and above a second threshold that indicates that the natural language response does not match the natural language representation;
   in response to receiving the score, selecting a parameter of the plurality of parameters; and
   generating an additional prompt comprising a natural language query requesting a value associated with the parameter.
NP 20. The one or more non-transitory, computer-readable storage media of NP 13, wherein the instructions for obtaining, based on the plurality of parameters, the natural language representation of the action further cause the one or more processors to perform operations comprising:
   transmitting, to a database system, a query comprising one or more parameter names associated with the plurality of parameters;
   receiving, from the database system, a plurality of natural language templates; and
   generating the natural language representation based on the plurality of natural language templates and the plurality of parameters.

## Claims

1. A system for authenticating user actions, the system comprising:
one or more processors; and
a non-transitory, computer-readable storage medium storing instructions that when executed by the one or more processors cause the one or more processors to:
receive an authentication request that indicates that an action was requested in relation to a user, wherein the authentication request comprises a plurality of parameters associated with the action;
input the plurality of parameters into a large language model to obtain a plurality of textual representations of the plurality of parameters, wherein each textual representation of the plurality of textual representations comprises a natural language description of the plurality of parameters;
transmit, to a user device of the user, a short message service message comprising a prompt for the user to describe the action as part of an authentication process;
receive, from the user device, textual data comprising a response to the prompt;
input the textual data and the plurality of textual representations into a machine learning model to obtain an indication of whether the textual data matches one or more textual representations of the plurality of textual representations, wherein the machine learning model has been trained to determine whether two textual representations describe a matching action; and
based on determining that the textual data matches the one or more textual representations, generate an authentication flag indicating that the action has been authenticated.

2. A method comprising:
receiving a first communication that indicates that an action was requested in relation to a user, wherein the first communication comprises a plurality of parameters associated with the action;
obtaining, based on the plurality of parameters, a plurality of natural language representations of the action;
transmitting, to a user device of the user, a second communication comprising a prompt for the user to describe the action;
receiving, from the user device, a natural language response to the prompt;
inputting the natural language response and the plurality of natural language representations into a machine learning model to obtain an indication of whether the natural language response corresponds to one or more natural language representations of the plurality of natural language representations, wherein the machine learning model has been trained to determine whether natural language representations describe a matching action; and
based on determining that the natural language response corresponds to the one or more natural language representations of the plurality of natural language representations, generating a third communication indicating that the action has been authenticated.

3. The method of claim 2, further comprising, based on determining that the natural language response does not match the one or more natural language representations of the plurality of natural language representations, generating a fourth communication indicating that the action has not been authenticated.

4. The method of claim 3, further comprising:
generating a warning message for the user, wherein the warning message comprises one or more parameters associated with the action and wherein the warning message indicates a security issue; and
transmitting the warning message to the user device of the user.

5. The method of any one of claims 2-6, further comprising:
determining a low-security subset of the plurality of parameters; and
generating the prompt comprising the low-security subset of the plurality of parameters.

6. The method of claim 5, wherein generating the prompt comprises inputting the low-security subset of the plurality of parameters into a large language model to obtain a custom prompt related to the action.

7. The method of any one of claims 2-6, further comprising:
receiving from the machine learning model a score below a first threshold that indicates that the natural language response corresponds to the one or more natural language representations of the plurality of natural language representations and above a second threshold that indicates that the natural language response does not match the one or more natural language representations of the plurality of natural language representations; and
in response to receiving the score, authenticating the action using a different channel.

8. The method of claim 7, further comprising:
receiving a message indicating that the action has been authenticated using the different channel; and
in response to receiving the message that the action has been authenticated using the different channel, executing a training routine of the machine learning model to train the machine learning model based on the score and a matching natural language representation.

9. The method of any one of claims 2-8, wherein obtaining the plurality of natural language representations of the action comprises inputting the plurality of parameters into a large language model with an instruction to generate natural language phrases based on the plurality of parameters.

10. The method of any one of claims 2-9, further comprising:
receiving from the machine learning model a score below a first threshold that indicates that the natural language response corresponds to the one or more natural language representations of the plurality of natural language representations and above a second threshold that indicates that the natural language response does not match the one or more natural language representations of the plurality of natural language representations;
in response to receiving the score, selecting a parameter of the plurality of parameters; and
generating an additional prompt comprising a natural language query requesting a value associated with the parameter.

11. The method of any one of claims 2-10, wherein transmitting, to the user device of the user, the second communication comprising the prompt for the user to describe the action comprises transmitting a short message service message to a telephone number associated with the user.

12. The method of any one of claims 2-11, wherein obtaining, based on the plurality of parameters, the plurality of natural language representations of the action comprises:
transmitting, to a database system, a query comprising one or more parameter names associated with the plurality of parameters;
receiving, from the database system, a plurality of natural language templates; and
generating the plurality of natural language representations based on the plurality of natural language templates and the plurality of parameters.

13. One or more non-transitory, computer-readable storage media storing instructions that when executed by one or more processors cause the method of any one of claims 2-12 to be carried out.

14. A system arranged to carry out a method according to any one of claims 2-12.
